# EUROPÄISCHE PATENTANMELDUNG

(11) **EP 1 905 947 A1**
(43) Veröffentlichungstag der Anmeldung: **02.04.2008**
(21) Anmeldenummer: 07116223.4
(22) Anmeldetag: 12.09.2007
(51) Int. Cl.: E21D 11/08, F24J 3/08, F28F 21/04

(54) **Wärme lieferndes Fertigteil, Energietübbing**

(30) Priorität: 13.09.2006 DE 102006043751; 20.12.2006 DE 102006060916
(71) Anmelder: Ed. Züblin Aktiengesellschaft, 70567 Stuttgart (DE); PSP Beratende Ingenieure Prof. Grübl - Dr. Ostermeier GbR, 80686 München (DE)
(72) Erfinder: Pralle, Norbert, Dr.-Ing., 70597 Stuttgart (DE); Friedemann, Wolf, 70192 Stuttgart (DE); Mayer, Peter-Michael, Dr.-Ing., 70192 Stuttgart (DE); Grübl, Fritz, Prof. Dipl-Ing., 80686 München (DE); Ostermeier, Bertram, Dr. Ing., 80686 München (DE); Schneider, Markus, 82387 Antdorf (DE)

(57) **Zusammenfassung**

Das Fertigteil, speziell z.B. ein Energietübbing (1), weist in seinem Inneren ein Hohlraumsystem (3) auf, in dem ein Absorberfluid strömt, welches Wärme von der Außen- bzw. Innenseite des Fertigteils aufnimmt und via eine Wärmepumpe oder einen Umwandler zu einem Verbraucher weiterleitet. Die Hohlräume (3) für das Absorberfluid sind zwischen den aneinandergrenzenden Fertigteilen bzw. Tübbingen verbindbar.

Die Fertigteile sind in ihrem Material im jeweiligen Bereich, in dem die Wärme aufgenommen werden soll, bevorzugt für gute Wärmeleitung ausgestaltet, zur anderen Seite hin auf Wärmedämmung. Die absorberfluidgefüllten Bereiche der Hohlräume (3), die nicht der Wärmeaufnahme, sondern dem Wärmeabtransport dienen, sind bevorzugt thermisch isoliert.

## Beschreibung

### Technisches Gebiet

Die Erfindung betrifft allgemein die Geothermie, speziell die sogenannte TunnelThermie^{®}. Dies ist die Nutzung von Erd- oder Abwärme in unterirdischen Bauwerken zu Heiz-/Klimatisierungszwecken. Die Erfindung ist aber nicht auf Tunnel beschränkt, sondern kann auch bei Mikrotunneln, Rohren und Ortbetonsenkkästen eingesetzt werden.

### Stand der Technik

Der Begriff TunneIThermie^{®} leitet sich ab aus "Tunnel" und "Geothermie". Durch Tunnel wird aufgrund ihrer großen an Bodenmaterial anliegenden Flächen ein hohes Maß an niederthermaler Energie aktiviert.

Der mittlere terrestrische Wärmestrom, der von der Erde an das Weltall abgegeben wird, beträgt 0,063 W/m², ist also sehr gering. Dies liegt an der geringen Wärmeleitfähigkeit des Bodenmaterials, die auch dafür verantwortlich ist, daß zur Erschließung der Geothermie große Oberflächen in Kontakt zum Boden gebracht werden müssen und im wesentlichen auch nur die in dem direkt umgebenden Bodenvolumen vorhandene Wärmeenergie nutzbringend abgezogen werden kann. Eine Nachlieferung von Wärme aus dem weiter entfernt liegenden Bodenmaterial in das dem Tunnel nächstgelegene findet wegen der geringen Wärmeleitfähigkeit des Bodenmaterials kaum statt.

Die aktivierbare Wärmemenge ist auch abhängig von der Tiefe des Bauwerkes und den geologischen Gegebenheiten (geothermische Tiefenstufe, eventuelle Wärmeanomalien, Wärmeleitfähigkeit des umgebenden Bodenmaterials, eventuelle wasserführende Schichten).

Es ist bekannt, diese Wärme mit Kunststoffabsorberleitungen abzuführen, die bei der Herstellung der Tunnelschale in den frischen Ortbeton der Schale eingelegt werden (z.B. Lainzer Tunnel und U2-Verlängerung in Wien, Pilotanlage Sportmittelschule Hadersdorf). Durch diese Leitungen kann z.B. im Winter aus dem wärmeren Bodenmaterial um das Bauwerk herum Wärme entzogen werden oder im Sommer Abwärme in das, relativ betrachtet, kühlere Bodenmaterial abgeführt und zwischengespeichert werden.

Das Einlegen der Absorberleitungen in den steifen Beton ist mit Problemen behaftet und in vielen Fällen werden Tunnel gar nicht in Ortbetonbauweise gebaut. Außerdem ist die Wärmeeinleitung in die Absorberrohre nicht optimal, der Wärmeabtransport nicht so hoch wie wünschenswert.

Weiterer Stand der Technik: Aus der DE 10 2004 054 541 A1 ist ein Schachtbauverfahren unter Verwendung spezieller Tübbinge zur Gewinnung geothermischer Energie bekannt. In einem senkrechten Schacht befinden sich Tübbinge, die einen inneren Dampfzwischenraum mit Rückhaltetaschen für Kühlmittel aufweisen. Zur Energiegewinnung strömt ein flüssiges Kühlmittel im Dampfzwischenraum zum Schachtgrund und wird dabei in den Rückhaltetaschen retardiert. In Abhängigkeit von der Schachttiefe erwärmt sich das Kühlmittel bis zur Verdampfung, so daß dessen Dampf aufgefangen und zur elektrischen Energieerzeugung genutzt werden kann.

Aus der DE 103 37 693 A1 ist bekannt, in Straßen- und Eisenbahntunneln geothermische Energie zu gewinnen. Gemäß der Lehre dieser Schrift wird eine flüssigkeitsführende Leitung in einen Straßenkörper eingebettet bzw. in den unter einer Tunneldecke verlaufenden Abluftkanälen installiert. Die in der Leitung strömende Flüssigkeit erhitzt sich aufgrund vorherrschender Gebirgstemperaturen, anfallender Abgasemissionen und Reibungstemperaturen. Es ist vorgesehen, die aufgenommene Wärme in an den Tunnelportalen angeordneten Wärmetauschern abzugeben und die erkaltete Flüssigkeit zur erneuten Erwärmung zurückzuführen.

Schließlich ist aus der DE 102 53 867 A1 bekannt, eine Kapillarrohrmatte in einem Feststoff oder Feststoffgemisch, wie Beton, Ortbeton oder Erdreich, vorzusehen, wobei in der Kapillarrohrmatte zirkulierende Flüssigkeit Wärme aufnehmen und in geeigneter Weise an geeigneter Stelle abgeben soll. Nachteilig am geschilderten Stand der Technik ist dessen teilweiser komplexer Aufbau bei geringer Effizienz und geringer Eignung für einen großtechnischen Einsatz.

### Aufgabe der Erfindung

Aufgabe der Erfindung ist es, die TunnelThermie^{®} zu optimieren und auf den Fall von unterirdischen Bauwerken, die aus erdanliegenden Fertigteilen, wie z.B. speziell Tübbings bestehen, anzupassen.

### Darstellung der Erfindung

Die Aufgabe wird durch die im Kennzeichen des Anspruchs 1 angegebenen Merkmale gelöst.

Die Erfindung kann nicht nur in Tunneln, sondern auch in Stations-, Stollen-, Kanal- und Schachtbauwerken Anwendung finden Wesentliches Merkmal der Erfindung ist hierbei, das für den Einsatzzweck nötige Fertigteil (Tübbing (1), Rohr, Ortbetonsenkkasten, Ringsegment) schon von vornherein mit zusammenhängenden Hohlräumen (3), bevorzugt Rohren oder Schläuchen, zu versehen, durch die ein Absorberfluid fließt, welches Wärme, die von der an wärmeres Nachbarmaterial angrenzenden Seite (meistens die äußere Mantelseite) des Fertigteils (das ist im Falle eines Tübbings die dem Bodenmaterial zugewandte Seite) her kommt, aufnimmt und zu einer Abzapfstelle weiterleitet. Auch die Anschlußmöglichkeiten (4, 5) an den Austrittsstellen aus dem Fertigteil (z.B. eben einem Tübbing (1)), die auch ein Zusammenschalten mehrerer solcher Fertigteile und den Anschluß an die Vor- und Rücklaufleitungen (14, 15) ermöglichen, sind schon vorgefertigt.

Das Absorberfluid (Flüssigkeit, Druckgas, superkritische Flüssigkeit) wird in einem Kreislauf durch Pumpen oder schwerkraftangetrieben (z.B. bei Heatpipes) bewegt.

Der Verlauf der Hohlräume (3) ist auf den Wärmeaustausch optimiert (z.B. Wendeln, Parallelanordnung, Schleifen).

Die fertigteilübergreifende druckdichte Kopplung der Hohlräume (3) oder Rohrleitungen erfolgt wahlweise oder kombiniert über die Fugen (22) zwischen den Fertigteilen, in entsprechenden Nischen (23) an der zugänglichen Seite des Fertigteils oder ohne Nische (23) aufliegend auf der zugänglichen Seite der Fertigteile. Hierfür sind viele Ausführungsvarianten, wie sie als Stand der Technik für dichte Verbindungen bekannt sind, denkbar, z.B. auch das "Gardena^{®}-System" oder ein verwandtes System, in dem die Verbindungen (8, 23) leicht austauschbar sind.

Durch Kopplung der Fertigteile untereinander können beliebige Kreisläufe optimal an die Anforderungen des Verbrauchers angepaßt werden.

Die Kreisläufe werden über Vor- und Rücklaufleitungen (14, 15) zum Verbraucher geschlossen.

Die gewonnene Wärme wird dann von einer Wärmepumpe als höhere Temperatur auf einen anderen Fluidkreislauf übertragen und ist dort direkt an einem Verbraucher nutzbar (z.B. Heizung).

In seltenen Fällen (hohe Temperaturen im angrenzenden Material, z.B. Gestein um den Tunnel bzw. das Bauwerk herum) ist die im Primärkreislauf des Fertigteils aufgenommene Wärme direkt ohne zwischengeschaltete Wärmepumpe für Heizungszwecke nutzbar.

Auch im Falle eines mit Absorberleitungen (3) ausgestatteten Rohres, durch welches erwärmtes Abwasser strömt (Prozeßwärme, Kraftwerkswärme), kann je nach Temperatur die gewonnene Wärme auch schon direkt genutzt werden (z.B. zur Frostfreihaltung von Löschleitungen).

So, wie Wärme aus einem an das Bauwerk angrenzenden Material (z.B. Bodenmaterial um Tunnel herum) gewonnen werden kann, kann über das Fertigteil, besonders einen erfindungsgemäß ausgestatteten Tübbing (1) (den "Energietübbing"), auch Wärme in umgekehrter Richtung in das Bodenmaterial zur Speicherung für eine spätere Verwendung eingebracht werden. Dies ist ebenfalls nur möglich aufgrund der geringen Wärmeleitfähigkeit des Bodenmaterials, welches das Bauwerk umgibt. Diese verringert einen Wärmeabfluß in weit entfernte Bodenbereiche stark.

Die wärmetechnischen Eigenschaften der Fertigteile (Tübbinge (1), Rohre, Betonsenkkästen) können gesteuert werden durch:
- Zuschlagstoffe
- Fasern verschiedenster Materialien zur Erhöhung oder Verringerung der Wärmeleitfähigkeit
- äußere Maßnahmen, z.B. Dämmung der Innenseite des Tunnels
- Konstruktive Maßnahmen, z.B. Herstellung von Oberflächenvergrößerungen (Rippen oder Kassetten) auf derjenigen Seite des Fertigteils, die energetisch genutzt werden soll.

Bodenmaterial und gewöhnlicher Beton haben größenordnungsmäßig vergleichbare Wärmeleitfähigkeiten: Beton üblicherweise eine Wärmeleitfähigkeit von 2,1 W/(m•K), Granit von 2,8 und Wasser von 0,6 (ohne Konvektion!). Feuchtes Bodenmaterial liegt in seiner Wärmeleitfähigkeit meistens etwas unter der von Beton.

Demgegenüber weist Stahl eine Wärmeleitfähigkeit von ungefähr 50 auf, Kupfer von 380, Silber von 429, Zink von 110. Ein Wärmerohr (Heatpipe) überschreitet die Wärmeleitfähigkeit von Kupfer um ein Vielfaches (abhängig von seiner Konstruktion).

Stahlbeton hat aufgrund seines gut leitenden Stahlanteils eine (von der Bewehrungsrichtung abhängige) Wärmeleitfähigkeit, die deutlich über der von Beton und über der des umgebenden Bodenmaterials liegt.

Begrenzend für den Wärmedurchgang ist also nicht der Stahlbeton des Fertigteils, sondern die Wärmeleitfähigkeit des an das Fertigteil angrenzenden Bodenmaterials und die Kontaktfläche zu diesem Bodenmaterial.

Sehr störend für den Wärmeübergang auf das Fertigteil wirken sich luftgefüllte Hohlräume zwischen Fertigteil und Bodenmaterial aus. Diese gilt es bei der Installation des Fertigteils mit Wasser und/oder Bodenmaterial zu verfüllen. Das hierfür verwendete Material sollte mindestens etwa die gleiche Wärmeleitfähigkeit, wie das Bodenmaterial haben.

Vorteilhafte Auswirkungen hingegen hat aus dem Bodenmaterial an das Fertigteil strömendes Wasser, da dieses einen erheblichen Konvektionsbeitrag zum Wärmetransport beisteuert.

Um die Wärmedurchgangsfläche zum Bodenmaterial zu verbessern, weist das Fertigteil daher bevorzugt an der bodenzugewandten Seite Fortsätze oder Einstülpungen auf, z.B. Rippen oder Kassetten.

Die Absorberleitungen (3) verlaufen bevorzugt dicht unter der dem wärmeren Nachbarmaterial (beim Tübbing (1) das Bodenmaterial) zugewandten Mantelfläche (6) des Fertigteils. Bevorzugt ist eine Anbringung zwischen Bewehrung (17) und Mantelfläche (6) und eine thermische Isolation zur (gut wärmeleitenden) Bewehrung (17) hin.

Bevorzugt sind die Absorberrohre (3) ab denjenigen Stellen, an denen sie nach innen in den kälteren Teil des Fertigteils hineinführen, wärmeisoliert. Dies betrifft insbesondere diejenigen Stellen, die Bewehrungsstahl (17) naheliegen.

Thermische Isolation ist vor allem für langsam (und damit energiesparend) fließende Absorberfluide notwendig, um die Wärme ohne Verlust zur Wärmepumpe oder zum Verbraucher transportieren zu können.

Langsam strömende Absorberfluide benötigen keine langen Wegstrecken durch Absorberleitungen (3), um ungefähr ein Temperaturgleichgewicht zu erreichen. Bis schnellströmende Fluide sich asymptotisch dem Gleichgewicht von Wärmeaufnahme und -abgabe angenähert haben, müssen hingegen lange Wege durch mehrere oder viele Fertigteile bzw. Tübbinge (1) hindurch zurückgelegt werden, oder aber, es müssen längere Absorberleitungen (3) mit kleinem Durchmesser und damit großer Oberfläche in einem Fertigteil verlegt sein, wodurch sich jedoch der Strömungswiderstand enorm erhöht! (ungefähr nach Hagen-Poiseuille mit r⁻⁴ !)

Eine andere Möglichkeit der Wärmegewinnung ist die mittels eines Öffnungen (eventuell mit Filtereinlagen) zu wasserführendem Bodenmaterial aufweisenden Fertigteils, durch die warmes Wasser aus dem Bodenmaterial abgezapft wird und an anderer Stelle kaltes (bzw. aus einem Wärmepumpenkreislauf stammendes, wieder erkaltetes) Wasser in den Boden eingepreßt wird (hydrothermale oder petrothermale Geothermie).

In Böden mit hohem Wasservorkommen und hoher Durchlässigkeit (Tunnelwasser, Bergwasser) kann auch nur warmes Wasser abgezapft werden, ohne im Gegenzug wieder kaltes Wasser einzupressen. Allerdings hat man dann das Problem des "Wohin" mit dem erkalteten Wasser.

In Fertigteilen, die mittels hydrothermaler oder petrothermaler Geothermie arbeiten, sind keine langen, an der Oberfläche entlanggeführten Absorberleitungen (3), sondern nur wenige und kurze Durchquerungsleitungen durch das Fertigteil hindurch nötig. Es besteht aber das Problem der Verkalkung. Daher führen diese Ableitungen und Zuleitungen bevorzugt möglichst kurz und gerade durch das Fertigteil und sind leicht sanierbar ausgestaltet (z.B. mechanisch oder chemisch sehr stabil, bzw. von geringer Kalkhaftung).

Die Figuren zeigen einige mögliche Ausführungsbeispiele für den Fall von Tübbingen (1), die in Tunneln zur Warmwassergewinnung eingesetzt werden können:

Die Figuren der Zeichnung zeigen im Einzelnen:
- **Fig. 1:**: einen Tunnelquerschnitt
- **Fig. 2a:**: eine Abwicklung eines Tunnelabschnittes mit Absorberleitun-gen, die sich von Eintrittsöffnung bis Austrittsöffnung über mehrere Tübbingringe (tübbingringübergreifend) erstrecken
- **Fig. 2b:**: einen perspektivischen "Röntgenblick" durch einen Tunnelab-schnitt, bei dem die Absorberleitungen nicht tübbingring-übergreifend verlaufen
- **Fig. 2c:**: einen seitlichen Blick auf solch einen Tunnelabschnitt, in dem die Absorberrohre der vorneliegenden Tübbinge im Röntgen-blick dargestellt sind
- **Fig. 3a:**: einen perspektivischen "Röntgenblick" durch einen Tübbing, wie er in Fig. 2b und Fig. 2c verwendet wird (Bewehrung nicht eingezeichnet).
- **Fig. 3b:**: einen Längsschnitt durch einen solchen Tübbing
- **Fig. 4a,b:**: Längsschnitte durch die Ausführungsformen erfindungsgemäßer Tübbinge (1) anderer Konstruktion
- **Fig. 4c:**: eine Ausführungsform der Anschlußeinrichtung (9) zur Zulaufleitung (14) oder Rücklaufleitung (15) aus einem Tübbing (1) heraus
- **Fig. 5:**: eine Verbindungsmöglichkeit zwischen zwei benachbarten Tübbingen (1) vor dem Zusammenführen derselben

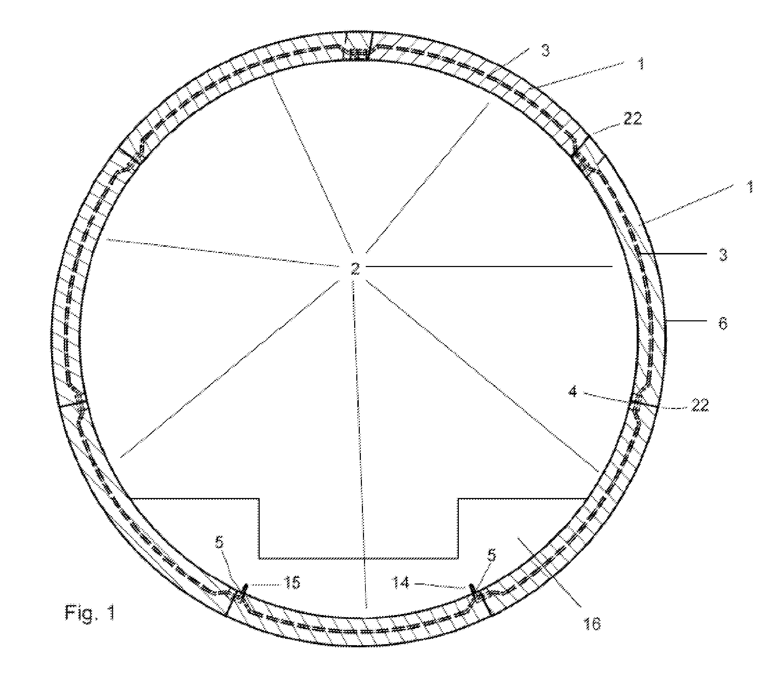

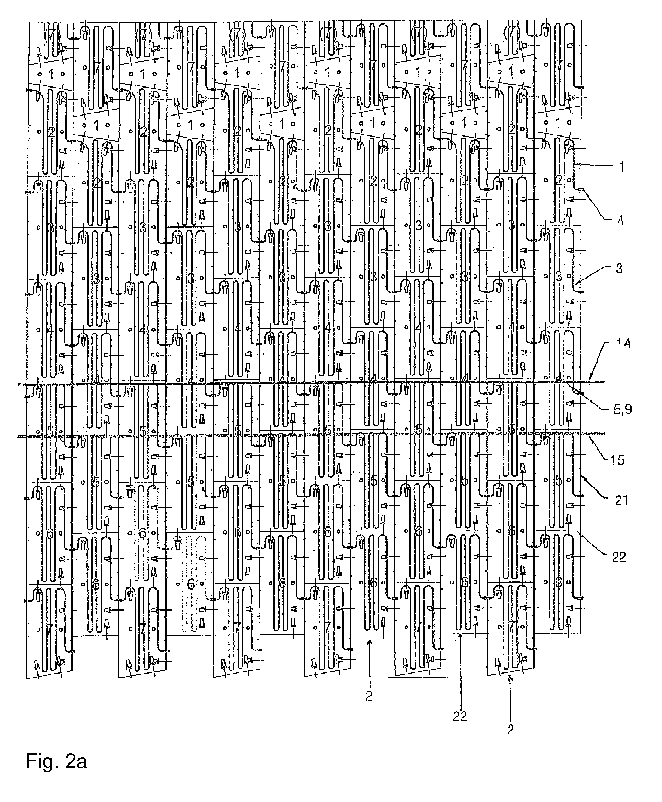

**Fig. 1** zeigt einen Tunnelquerschnitt mit Energietübbingen (1) eines Tübbingrings (2) und Versorgungsleitungen, nämlich einer Zulaufleitung (14) und einer Rücklaufleitung (15). Im Bodenbereich des Tunnels befinden sich Sohle und Bankette (16) aus Füllbeton zur Aufnahme von Gleissystem und Versorgungsleitungen. In diesem Beton (16) werden die Zulaufleitung (14) und die Rücklaufleitung (15) für die Absorberflüssigkeit geführt. Ein kompletter Tübbingring (2) besteht z. B. aus sieben Segmenten (1) (und optional einem Schlußstein). Nachfolgende Tübbingringe (2) sind versetzt angeordnet, so daß sich keine Kreuzfugen ergeben. Diese alternierende Anordnung ist in den Fig. 2a bis c dargestellt.

Fig. 1 zeigt deutlich, daß keine Absorberleitungen (3) nachträglich eingebaut werden müssen, sondern die Leitungen (3) zur Gewinnung geothermischer Energie mechanisch geschützt innerhalb der durch die Tübbinge (1) gebildeten Wandung des Tunnels verlaufen.

**Fig. 2a** zeigt eine Innenabwicklung einer Tunnelwand mit Tübbingen (1), Zulaufleitung (14), Rücklaufleitung (15), Absorberleitungen (3) und Temperiermittelübergabepunkten (5). In Richtung der x-Achse der Fig. 2a ist die Tunnellängsrichtung dargestellt, in Richtung der y-Achse die abgewickelte Tunnelinnenfläche. Zu erkennen ist die alternierende Anordnung der einzelnen numerierten Tübbinge (1) benachbarter Tübbingringe (2). Jeder Tübbing (1) weist eine in ihm mäandrierend verlaufende Absorberleitung (3) mit je einer Anschlußeinrichtung (4) an dessen gegenüberliegenden Längsseiten auf. Der Durchmesser, die Biegeradien und das verwendete Material der Absorberleitung (3) wird in Abhängigkeit der energetischen Dimensionierung sowie des einzusetzenden Absorbens ausgewählt.

Die Anschlußeinrichtungen (4) liegen sich im Ausführungsbeispiel der Fig. 2a nicht direkt, sondern diametral gegenüber. Diese versetzte Anordnung führt dazu, daß die Absorberflüssigkeit pro zurückgelegter Strecke in Tunnellängsrichtung gleichzeitig eine gewisse Strecke, nämlich den axialen Abstand zwischen den beiden Anschlußeinrichtungen (4) eines Tübbings (1), in Tunnelquerrichtung zurücklegt. Dies führt zu einer um die Tunnelwandung spiralförmig verlaufenden Absorberleitung (3), die über mehrere Tübbingringe (2) verläuft. Da jeder zweite Tübbingring (2) ein Startpunkt einer eigenen Absorberleitung (3) ist, ergibt sich somit ein kontinuierlich spiralförmig um den Tunnelmantel verlaufender Absorptionsbereich.

An den Schnittpunkten von Zulaufleitung (14) und Absorberleitung (3) befindet sich eine weitere Anschlußeinrichtung (5), so daß ein Übergang des Absorbens, insbesondere Wasser (eventuell plus geeignete Zusätze), von der Zulaufleitung (14) in die Absorberleitung (3) stattfindet. Hierdurch wird erreicht, daß das Absorbens in Tunnellängsrichtung kontinuierlich spiralförmig um die Tunnelwandung herumgeführt wird. In Abhängigkeit von der gewünschten Energieaufnahme kann vorgesehen sein, daß die Absorberleitung (3) nicht bereits nach einem spiralförmigen Umlauf, sondern vielmehr nach zwei, drei oder beliebig vielen spiralförmigen Umläufen an einem Übergabepunkt (der Anschlußeinrichtung) (5) in die Rücklaufleitung (15) mündet. Am gewünschten Ende der Absorberstrecke wird das in Abhängigkeit der Gebirgstemperatur um mehrere Grad Kelvin erwärmte Absorbens auf diese Weise entnommen und über eine Rücklaufleitung (15) einer nicht dargestellten Wärmepumpe zugeführt. Zur Entnahme und zur Einspeisung der Absorberflüssigkeit muß die Absorberleitung (3) unterbrochen werden. Dazu bedarf es einer möglichst einfachen, robusten und unaufwendigen Methode, die beim Zusammenbau im Tunnel keinen großen Zeitaufwand hervorruft.

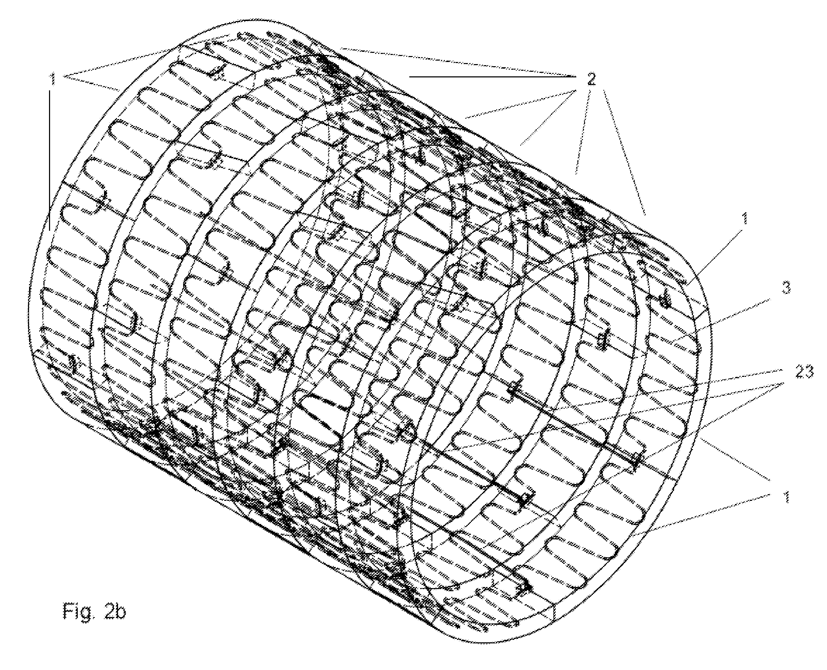

**Fig. 2b** zeigt von der Seite perspektivisch im "Röntgenblick" einen Tunnelabschnitt aus mehreren Tübbingringen (2), deren Tübbinge (1) ebenfalls von Ring (2) zu Ring (2) versetzt angeordnet sind. Die bewehrung ist der Übersicht halber weggelassen. Anders als Fig. 2a zeigt Fig. 2b einen Tunnel, bei dem die Absorberleitungen nicht über die Längsseiten in den benachbarten Tübbingring (2) verlaufen, sondern in einem Ring verbleiben und stattdessen innenliegende zugängliche Überbrückungsleitungen die Tübbingringe (2) miteinander verbinden. Eine solche Anordnung ist einfacher zu reparieren, als eine Ausführung nach Fig. 2a.

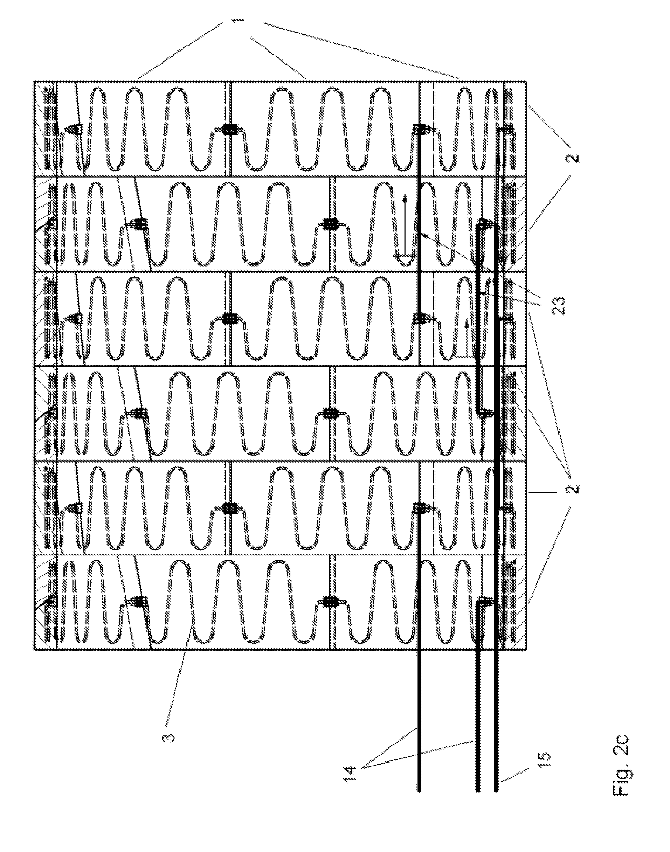

**Fig. 2c** zeigt eine seitliche Ansicht des Tunnelabschnitts von Fig. 2b, wobei die in den Tübbingen (1) liegenden Absorberrohre ebenfalls dargestellt sind und auch die Zulaufleitung (14), Rücklaufleitung (15) und die innenliegenden Überbrückungsleitungen .

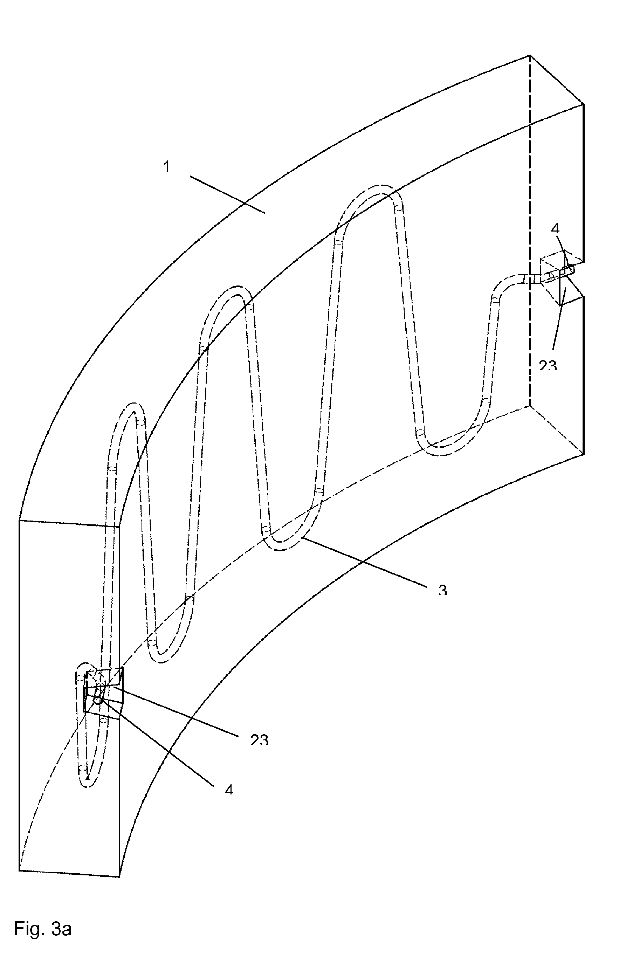

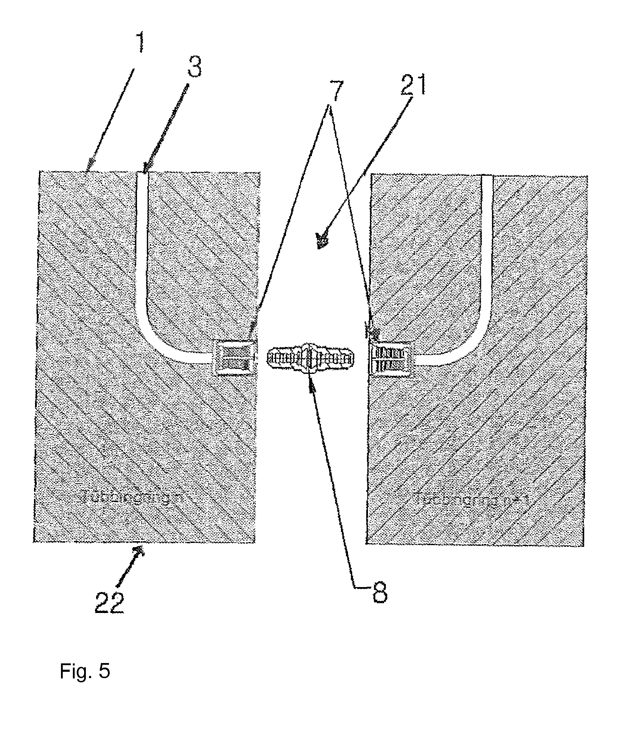

**Fig. 3a** zeigt einen perspektivischen Röntgenblick durch einen Tübbing (1) (Bewehrung nicht dargestellt), wie er in einem Tunnel gemäß Fig. 2b und 2c abgebildet ist. Man erkennt an den Rändern des Tübbings (1) und dem Tunnelinneren zugewandt Nischen (23), die vom Tunnelinneren her leicht zugänglich sind, und in denen die Absorberrohre enden. In diesen Nischen wird dann auch die Verbindung der Absorberrohre (3) aneinandergrenzender Tübbinge (1) hergestellt. Diese Ausgestaltung vereinfacht Wartungsarbeiten (z.B. wegen Undichtigkeit). Außerdem muß bei der Montage der Tübbinge (1) keine Rücksicht auf Verbindungsstücke (8) genommen werden, wie sie z.B. in der Fig. 5 beschrieben sind. Da die Öffnungen der Absorberrohre (3) in den Nischen (23) versenkt liegen, kommt ein Verbindungsstück zwischen zwei Absorberrohren (3) benachbarter Tübbinge (1) nicht über die Innenoberfläche der Tübbinge (1) zu liegen. Die Verbindung erfolgt vorteilhaft über ein ungefähr U-förmiges Brückenstück , welches bevorzugt auswechselbar ist (z.B. gemäß Gardena^{®}- oder einem ähnlichem System). Über ein T-Stück läßt sich in der Nische (23) auch der Anschluß (5) an die Zulauf- oder Rücklaufleitung (14 oder 15) bewerkstelligen.

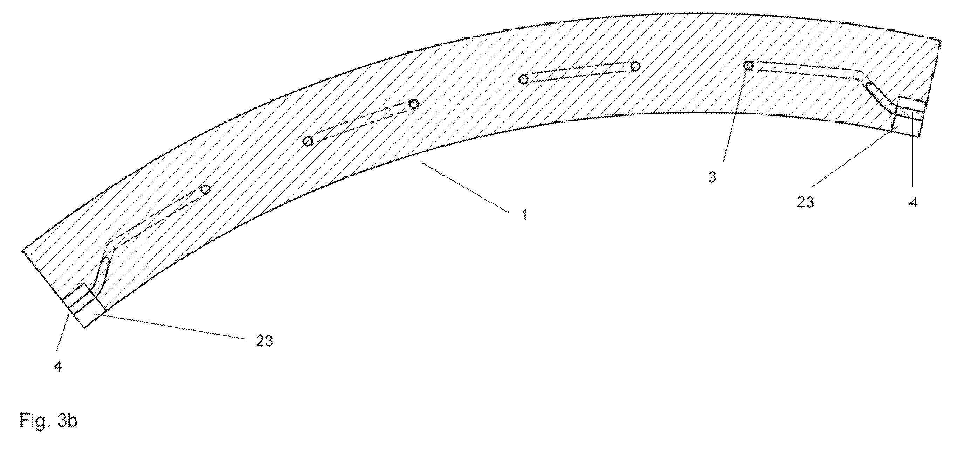

**Fig. 3b** zeigt denselben Tübbing (1) im Längsschnitt.

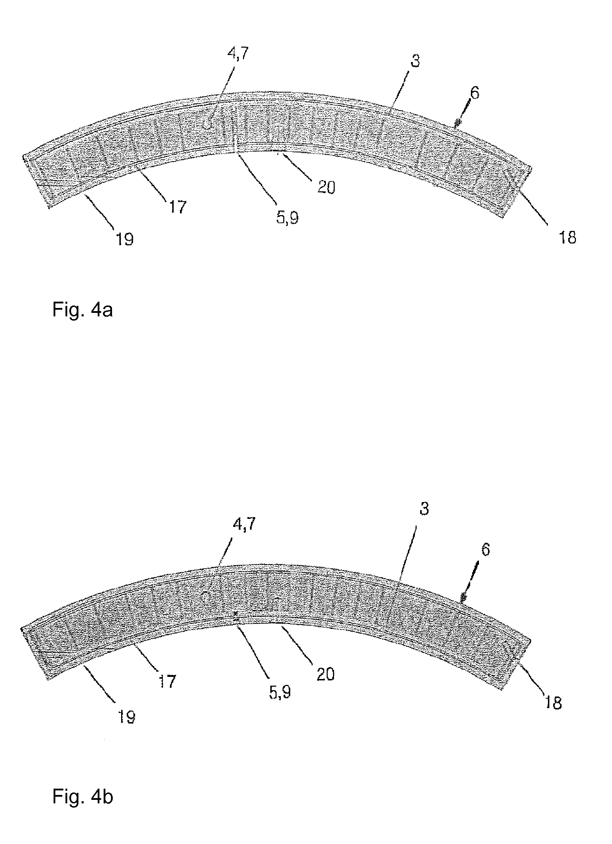

**Fig. 4a** zeigt einen Längsschnitt durch einen anderen erfindungsgemäßen Tübbing (1) mit Absorberleitung (3) zur Energieaufnahme durch das anstehende Gestein. Die Absorberleitung (3) ist aus diesem Grund im Bereich der äußeren Bewehrungslage (17) angeordnet.

Dargestellt sind die kreisbogensegmentförmige Ausbildung des Tübbings (1), dessen äußere, innere und vertikale Bewehrungslagen (17) sowie dessen Dübelaufnahme (18) und Schraubentasche (19) zur Befestigung an anderen Tübbingen (1). Dargestellt ist ebenfalls eine Aussparung (20) für den Erektorgriff der Vortriebsmaschine. Die Entnahme oder die Einspeisung der Absorberflüssigkeit erfolgt über einen Anschlußstutzen (9) in Form einer Sackbohrung, in deren Bodenbereich die Absorberleitung (3) verläuft. Dieser Anschlußstutzen (9) ist im Normalfall durch einen Schraubstopfen verschlossen. Wird an dieser Stelle ein Anschluß an die Zulauf- oder Rücklaufleitung (14, 15) gewünscht, so wird anstelle des Schraubstopfens eine Hülse (10) eingeführt.

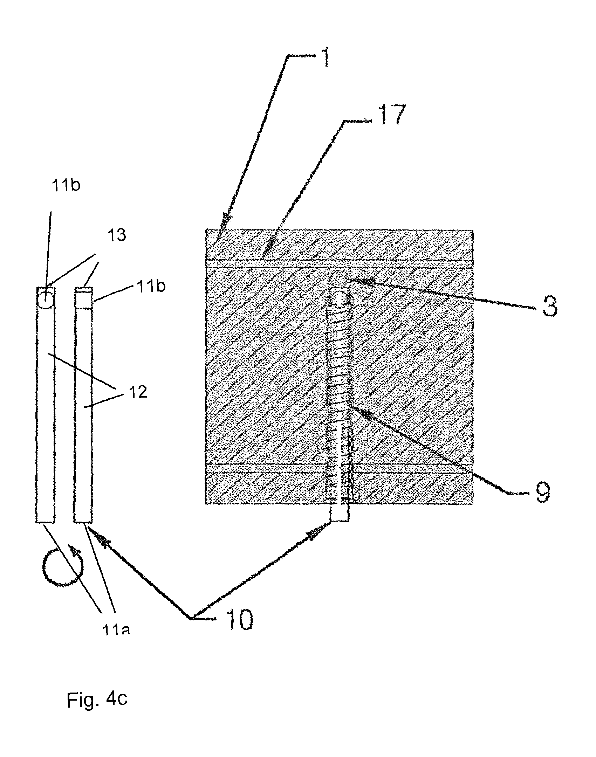

Gemäß **Fig. 4c** besteht diese Hülse (10) aus einem Hohlzylinder mit einer kreisförmigen Öffnung (11) in der Zylinderwand im Endbereich des Hohlzylinders sowie einer an der Stirnseite des Hohlzylinders angeformten Schneide.

Diese Hülse sperrt die Absorberleitung (3) gegen Nachfluß bzw. gegen Weiterfließen ab. Sie weist weiterhin eine flüssigkeitsdichte Kupplung für den Anschluß an eine Sammelleitung auf. Zur Unterbrechung der Absorberleitung (3) wird diese Hülse in den Anschlußstutzen (9) geschoben, die Schneide durchtrennt die Absorberleitung (3), beispielsweise einen PE-Schlauch, danach strömt die Absorberflüssigkeit durch die Öffnung (11) im Zylindermantel (12) in den Hohlzylinder und aus diesem in eine nicht dargestellte Rücklaufleitung (15) oder umgekehrt aus einer Zulaufleitung (14) in die Absorberleitung (3).

**Fig. 4b** zeigt einen Längsschnitt durch eine mit Fig. 4a vergleichbare Ausführungsform eines erfindungsgemäßen Tübbings (1), aber mit innenliegenden Absorberleitungen (3), also zur Energiegewinnung aus der Tunnelluft oder der Reibung der Fahrzeuge auf der Fahrbahn. Diese Ausführungsform unterscheidet sich von der in Fig. 4a dargestellten vor allem durch die Länge des Anschlußstutzens (9).

**Fig. 5** zeigt eine Möglichkeit zur Verbindung der Absorberleitungen (3) zweier aneinandergrenzender Tübbinge (1) über die Ringfuge (21) (oder bei anderem Tübbingaufbau Längsfuge (22)) zwischen den beiden Tübbingen (1) hinweg. Die betroffenen Abschnitte der Tübbinge (1) sind im noch auseinandergerückten Zustand abgebildet. Die Verbindung der Leitungen (3) wird durch zwei Aufnahmehülsen (7) am Austrittsort aus dem Tübbing (1) und ein in diese eingeführtes Verbindungselement (8) gebildet, wobei das Verbindungselement (8) vorzugsweise spiegelsymmetrisch und druckdicht als Muffe ausgebildet ist. Die Aufnahmehülsen (7) sind im Bereich der Fuge (21 bzw. 22) in den Tübbing (1) werkseitig einbetoniert.

Ein erfindungsgemäßer Tübbing (1) weist demnach zwei voneinander beabstandete Anschlußstutzen (4) der Absorberleitung (3) auf, sowie mindestens eine Anschlußeinrichtung (5) für den Anschluß an eine Zulauf- oder Rücklaufleitung (14 oder 15). Demnach weist er zwei überwiegend orthogonal aufeinander stehende Anschlußsysteme auf.

Bei Tübbingen mit Nischen (23), wie in Fig. 3 a und b abgebildet, findet der Anschluß an die Zulauf- und Rücklaufleitung bevorzugt ebenfalls in der Nische (23) über eine Art T-Stück statt.

### Bezugszeichenliste

- 1: Tübbing
- 2: Tübbingring
- 3: Hohlraum, Rohr, Schlauch als Absorberleitung
- 4: Anschlußeinrichtung zwischen Tübbingen
- 5: Anschlußeinrichtung zur Zulauf- oder Rücklaufleitung
- 6: Mantelfläche
- 7: Aufnahmehülse
- 8: Verbindungselement für (3) über Fuge hinweg
- 9: Anschlußstutzen
- 10: Abschiebehülse
- 11a: Öffnungen
- 11b:
- 12: Zylindermantel
- 13: Schneide
- 14: Zulaufleitung
- 15: Rücklaufleitung
- 16: Sohle und Bankette
- 17: Bewehrungslage
- 18: Dübelaufnahme
- 19: Schraubentasche
- 20: Aussparung für Erektorgriff
- 21: Ringfuge
- 22: Längsfuge
- 23: Nische

## Patentansprüche

1. In den Untergrund einbaubares Betonfertigteil zur Gewinnung geothermischer Energie, welches mindestens einen zusammenhängenden Hohlraum, ein Rohr oder einen Schlauch (3) mit Zu- und Ableitungsöffnung (4) zur Beförderung eines Trägerfluides zum Transport von Wärme oder Kälte aufweist,
**dadurch gekennzeichnet, daß** es sich um einen Tübbing (1), einen Ortbetonsenkkasten, ein Rohr oder einen Rohrabschnitt handelt.

2. Fertigteil nach Anspruch 1,
**dadurch gekennzeichnet, daß** der oder die Hohlräume/Rohre/Schläuche (3) eine oder mehrere Öffnungen aufweisen, die durch die dem Bodenmaterial zugewandte Mantelfläche (6) des Fertigteils nach außen zum Bodenmaterial und durch die dem Bauwerksinneren zugewandte Mantelfläche (6) nach innen weisen und die dem Abzapfen von warmem Wasser aus dem Bodenmaterial oder dem Abzapfen von warmem Wasser und Einleiten von abgekühltem Wasser in das Bodenmaterial dienen.

3. Fertigteil nach Anspruch 1,
**dadurch gekennzeichnet, daß** das Fertigteil an seiner dem umgebenden Bodenmaterial zugewandten Mantelfläche (6) geschlossen und wasserdicht ausgebildet ist und der in ihm befindliche Hohlraum/Rohr/Schlauch (3) eine gegenüber einem Absorberfluid dichte Absorberleitung (3) ist, die sich zur verbesserten Wärmeübertragung dicht unterhalb der an das Bodenmaterial angrenzenden Mantelfläche (6) des Fertigteils befindet und über Verbindungsstücke (8) mit den Hohlräumen/Rohren/Schläuchen (3) benachbarter Fertigteile (1) oder mit Sammelleitungen (14, 15) verbindbar ist.

4. Fertigteil nach Anspruch 3,
**dadurch gekennzeichnet, daß** die wärmeaustauschende Schicht des Fertigteils (1), in der sich die im späteren Betriebszustand mit Absorberfluid gefüllten Hohlräume/Rohre/Schläuche (3) befinden, aus einem Beton besteht, der eine Wärmeleitfähigkeit von mehr als 2,8 W/(m•K) aufweist.

5. Fertigteil nach mindestens einem der Ansprüche 3 und 4,
**dadurch gekennzeichnet, daß** diejenigen Bereiche des Fertigteils (1), durch die hindurch nur Ab- und Antransport des wärmeübertragenden Absorberfluids stattfindet, eine Wärmeleitfähigkeit von deutlich weniger als 2,8 W/(m•K) aufweisen, also thermisch isolierend wirken.

6. Fertigteil nach mindestens einem der Ansprüche 3 bis 5,
**dadurch gekennzeichnet, daß** die Wärmeleitfähigkeit des Betons in denjenigen Bereichen, die dem Wärmeaustausch dienen, durch wärmeleitende Zuschlagstoffe erhöht ist und in den Bereichen, die dem möglichst verlustfreien Weitertransport der zuvor aufgenommenen Wärme dienen, durch wärmedämmende Zuschlagstoffe erniedrigt ist.

7. Fertigteil nach Anspruch 6,
**dadurch gekennzeichnet, daß** die Wärmeleitfähigkeit in der dem Wärmeaustausch dienenen Schicht des Fertigteils (1) durch wärmeleitfähige Fasern erhöht ist, die statistisch gemittelt eine Ausrichtung in Richtung des Temperaturgefälles haben.

8. Fertigteil nach mindestens einem der Ansprüche 3 bis 7,
**dadurch gekennzeichnet, daß** das Fertigteil (1) auf derjenigen Seite, die dem Wärmeaustausch dient, oberflächenvergrößernde Strukturen wie Rippen oder Kassetten aufweist.

9. Fertigteil nach mindestens einem der Ansprüche 1 bis 8,
**dadurch gekennzeichnet, daß** das Fertigteil (1) auf derjenigen Seite, die nicht dem Wärmeaustausch dient, eine Wärmedämmschicht aufweist.

10. Tübbing (1) nach mindestens einem der Ansprüche 1 und 3 bis 9,
**dadurch gekennzeichnet, daß** der Tübbing (1) zwei jeweils miteinander über eine Absorberleitung (3) verbundene Anschlußeinrichtungen (4) aufweist, wobei die zwei Anschlußeinrichtungen (4) einander gegenüberliegend auf Längs- oder Schmalseiten des Tübbing (1) angeordnet sind.

11. Tübbing (1) nach Anspruch 10,
**dadurch gekennzeichnet, daß** die Anschlußeinrichtungen (4) zueinander versetzt sind, insbesondere einander diametral gegenüberliegen.

12. Tübbing (1) nach mindestens einem der Ansprüche 10 und 11,
**dadurch gekennzeichnet, daß** er eine weitere Anschlußeinrichtung (5) aufweist, die mit der Absorberleitung (3) verbindbar ist und die auf der dem Tunnelinneren zugewandten Mantelfläche (6) des Tübbing (1) angeordnet ist.

13. Tübbing (1) nach mindestens einem der Ansprüche 10 bis 12,
**dadurch gekennzeichnet, daß** die Absorberleitung (3) im Inneren des Tübbings (1) angeordnet und mäandrierend ausgebildet ist.

14. Tübbing (1) nach mindestens einem der Ansprüche 10 bis 13,
**dadurch gekennzeichnet, daß** die Absorberleitung (3) überwiegend im Bereich der wärmeren der beiden Mantelflächen (6) des Tübbings (1) angeordnet ist.

15. Tübbing (1) nach mindestens einem der Ansprüche 10 bis 14,
**dadurch gekennzeichnet, daß** die Anschlußeinrichtung (4) zwischen zwei benachbarten Tübingen (1) aus einer Aufnahmehülse (7) und einer Muffe (8) besteht.

16. Tübbing (1) nach mindestens einem der Ansprüche 10 bis 15,
**dadurch gekennzeichnet, daß** die Anschlußeinrichtung (5) zu einer versorgungsleitung (14, 15) einen Anschlußstutzen (9), vorzugsweise verschließbar, sowie eine Abschiebehülse (10) aufweist.

17. Tübbing (1) nach mindestens einem der Ansprüche 10 bis 16,
**dadurch gekennzeichnet, daß** die Abschiebehülse (10) ein Hohlzylinder ist, der zwei aufeinander überwiegend senkrecht stehende Öffnungen (11 a, 11 b) aufweist, eine Öffnung (11 a) auf einer Stirnseite und eine weitere Öffnung (11 b) im Zylindermantel (12) in Nähe zur anderen Stirnseite, wobei der Zylindermantel (12) auf der Seite der Öffnung (11 b) als Schneide (13) ausgebildet ist.

18. Tübbing (1) nach mindestens einem der Ansprüche 10 bis 15,
**dadurch gekennzeichnet, daß** die Anschlußeinrichtungen (4) sich in dem Tunnelinneren zugewandten Nischen (23) des Tübbings (1) befinden.

19. Tunnel mit einer Betoninnenschale, aufweisend Tübbinge (1) gemäß einem oder mehreren der Ansprüche 10 bis 18.

20. Tunnel mit einer Betoninnenschale, aufweisend Tübbinge (1) gemäß Anspruch 2.
